# EUROPEAN PATENT APPLICATION

(11) **EP 2 910 874 A1**
(43) Date of publication of application: **26.08.2015**
(21) Application number: 14187511.2
(22) Date of filing: 02.10.2014
(51) Int. Cl.: F25B 41/06

(54) **PILOT OPERATED ELECTROMAGNETIC VALVE**

(30) Priority: 04.10.2013 JP 2013209505
(71) Applicant: TGK CO., Ltd., Tokyo 193-0942 (JP)
(72) Inventor: Ogawa, Hirofumi, Tokyo, 193-0942 (JP); Saeki, Shinji, Japan, 193-0942 (JP); Andoh, Toshihiro, Japan, 193-0942 (JP); Abe, Shigeru, Japan, 193-0942 (JP); Yuasa, Tomohiro, Japan, 193-0942 (JP)
(74) Representative: Schröer, Gernot H.

(57) **Abstract**

An electromagnetic valve (1) according to one embodiment includes a driven member (40) configured such that a piston (46) and a valve element are vertically coupled with each other and configured such that a pilot passage (50) runs through the driven member (40). Here, the piston (46) separates a high-pressure chamber (64), which communicates with a lead-in port (14), from a back pressure chamber (66). The valve element opens and closes a main valve (6) by moving toward and away from a valve hole. The pilot passage (50) communicates between a low-pressure chamber (65), which communicates with a lead-out port (18), and the back pressure chamber (66). A communicating path (74), through which the high-pressure chamber (64) and the back pressure chamber (66) communicate with each other, is formed in the piston (46). The communicating path (74) is formed such that an orifice (142), which is open to the back pressure chamber (66), and a communication hole (144), having a larger cross section than that of the orifice (142), are vertically connected with each other. The orifice (142) is located above the communication hole (144).

## Description

The present invention relates to a pilot operated electromagnetic control valve.

An automotive air conditioner is generally configured such that it includes a compressor, a condenser, an evaporator, and so forth arranged in a refrigerant circulation passage. Various types of control valves are provided for the purpose of, for example, switching the refrigerant circulation passages according to the operation state in such a refrigeration cycle and regulating the flow rate of refrigerant. A pilot operated electromagnetic valve capable of controlling the opening and closing of a large valve section using a relatively small electric power may be used as such the control valve (see Reference (1) in the following Related Art List, for instance).

Such an electromagnetic valve drives a small pilot valve element by a solenoid so as to open and close a pilot valve and then drives a large main valve element by a pressure difference regulated thereby so as to open and close a main valve. A piston is formed integrally with the main valve element, and a back pressure chamber is formed by this piston as a separated space inside a body. A leak passage, through which to introduce the refrigerant into the back pressure chamber, and a pilot passage, through which the refrigerant is led out from the back pressure chamber, are formed in the main valve element. And the opening and closing of the pilot valve opens and blocks the pilot passage, respectively. With this structure, the opening and closing of the main valve is controlled by varying the pressure of the back pressure chamber. The pressure of the back pressure chamber is regulated through a balance between the flow rate of refrigerant introduced into the back pressure chamber and the flow rate of refrigerant led out from the back pressure chamber.

### Related Art List

(1) Japanese Unexamined Patent Application Publication (Kokai) No. 2001-124440.

The refrigerant flowing through the refrigeration cycle circulates by repeating the change in the states of being a gas, a liquid and a gas-liquid mixed state. Thus, depending on the mixing ratio of liquid refrigerant introduced into a back pressure chamber, there may pose a problem for the actuation of the electromagnetic control valve. In other words, when the gas-liquid mixed refrigerant is led into the back pressure chamber, the liquid refrigerant having a high density stays on a piston and then a pressure drop in the back pressure chamber causes the liquid refrigerant to evaporate. This makes it difficult to relieve or extract the pressure from the back pressure chamber even though the pilot valve is opened, which in turns makes it difficult for the main valve element to operate smoothly.

In order to avoid such a situation, conceivable is a configuration, for example, where the cross-sectional area of a leakage passage is enlarged and the liquid refrigerant is discharged by its own weight. However, enlarging the leak passage, through which the refrigerant is introduced, entails enlarging the pilot passage, through which the refrigerant is led out, with the result that the pilot valve becomes larger. This means that the solenoidal force required to drive the pilot valve element becomes greater. In order to cope with this, it is necessary that the size of a solenoid coil be increased or the pressure difference in the main valve be remained in a small range. That is, in the latter case, the main valve element is not actuated until the pressure difference acting on the piston gets small. Now, in the first case, the increasing size of the solenoid is problematic with respect to cost. The latter case also develops problems with the aspect of performance due to the drop in the actuation responsiveness of the main valve.

A purpose of the present invention is to have a pilot operated electromagnetic valve, which controls the flow of gas-liquid mixed refrigerant, operated smoothly without enlarging the solenoid.

In order to resolve the aforementioned problems, a pilot operated electromagnetic valve according to one embodiment of the present invention includes: a body having a lead-in port through which a refrigerant is led in, a lead-out port through which the refrigerant is led out, and a main valve hole provided in a main passage joining the lead-in port to the lead-out port; a solenoid mounted such that an upper end opening of the body is sealed off; a driven member configured such that a piston and a main valve element are vertically coupled with each other and configured such that a pilot passage runs through the driven member, wherein the piston separates a high-pressure chamber, which communicates with the lead-in port, from a back pressure chamber, wherein the main valve element opens and closes a main valve by moving toward and away from the main valve hole, and wherein the pilot passage communicates between a low-pressure chamber, which communicates with the lead-out port, and the back pressure chamber; and a pilot valve element that opens and closes a pilot valve by moving toward and away from a pilot valve hole from above, wherein the pilot valve element is integrally formed with a plunger of the solenoid and wherein the pilot valve hole is provided on an upper end of the pilot passage. A communicating path, through which the high-pressure chamber and the back pressure chamber communicate with each other, is formed in the piston, and the communicating path is formed such that an orifice, which is open to the back pressure chamber, and a communication hole, having a larger cross section than that of the orifice, are vertically connected with each other.

By employing this embodiment, the communicating path, formed in the piston, for introducing the refrigerant into the back pressure chamber is formed such that the small-diameter orifice and the large-diameter communication hole are vertically connected with each other. Thus, the action of a liquid refrigerant drawn by the surface tension is restricted by the large-diameter communication hole, when the refrigerant in the high-pressure chamber is introduced into the back pressure chamber through this communicating path. In other words, the introduction of the liquid refrigerant can be restricted while the flow of gaseous refrigerant into the back pressure chamber is facilitated. As a result, the occurrence of the situation where the pressure of the back pressure chamber is less likely to drop is prevented, so that the operation of the main valve element can be kept smoothly while the diameter of the orifice remains small. In other words, the pilot operated electromagnetic valve can be smoothly operated without increasing the size of the solenoid.

Another embodiment of the present invention relates also to an electromagnetic valve. This electromagnetic valve includes: a body having a lead-in port through which a refrigerant is led in, a lead-out port through which the refrigerant is led out, and a main valve hole provided in a main passage joining the lead-in port to the lead-out port; a solenoid mounted such that an upper end opening of the body is sealed off; a driven member configured such that a piston and a main valve element are vertically coupled with each other and configured such that a pilot passage runs through the driven member, wherein the piston separates a high-pressure chamber, which communicates with the lead-in port, from a back pressure chamber, wherein the main valve element opens and closes a main valve by moving toward and away from the main valve hole, and wherein the pilot passage communicates between a low-pressure chamber, which communicates with the lead-out port, and the back pressure chamber; and a pilot valve element that opens and closes a pilot valve by moving toward and away from a pilot valve hole from above, wherein the pilot valve element is integrally formed with a plunger of the solenoid and wherein the pilot valve hole is provided on an upper end of the pilot passage. A refrigerant introducing path, through which the lead-in port and the high-pressure chamber communicate with each other, is provided in the body, and the refrigerant introducing path is formed such that a first passage portion, which is open to the high-pressure chamber, and a second passage portion, having a larger cross section than that of the first passage portion, are vertically connected with each other.

By employing this embodiment, the refrigerant introducing path, through which the lead-in port and the high-pressure chamber communicate with each other, is formed such that the first passage portion, having a small diameter, and the second passage portion, having a large diameter, are vertically connected with each other. Thus, the action of the liquid refrigerant drawn by the surface tension is restricted by the second passage portion having the large diameter, when the refrigerant introduced through the lead-in port is introduced into the high-pressure chamber through this refrigerant introducing path. Thereby, the introduction of the liquid refrigerant can be restricted while the flow of gaseous refrigerant into the high-pressure chamber and eventually the back pressure chamber is facilitated. As a result, the occurrence of the situation where the pressure of the back pressure chamber is less likely to drop is prevented, so that the operation of the main valve element can be kept smoothly while the diameter of the orifice remains small. In other words, the pilot operated electromagnetic valve can be smoothly operated without increasing the size of the solenoid.

Embodiments will now be described by way of examples only, with reference to the accompanying drawings which are meant to be exemplary, not limiting, and wherein like elements are numbered alike in several Figures in which:
- FIG. 1: is a cross-sectional view showing a concrete structure of an electromagnetic valve according to a first embodiment;
- FIG. 2: is a diagram for explaining an operating state of a control valve;
- FIG. 3: is a partially enlarged view showing a driven member and its peripheral components;
- FIGS. 4A and 4B: are each a partially enlarged view of a seal structure in a piston of a driven member;
- FIG. 5: is a cross-sectional view showing a concrete structure of an electromagnetic valve according to a second embodiment; and
- FIG. 6: is a diagram for explaining an operating state of a control valve.

The invention will now be described by reference to the preferred embodiments. This does not intend to limit the scope of the present invention, but to exemplify the invention.

The present invention will now be described in detail based on preferred embodiments with reference to the accompanying drawings. In the following description, for convenience of description, the positional relationship in each structure may be expressed with reference to how each structure is depicted in Figures.

### [First Embodiment]

The present embodiment is a constructive reduction to practice of the present invention where a control valve according to the preferred embodiments is used as an electromagnetic valve applied to an air conditioner of an electric-powered vehicle. The automotive air conditioner is provided with a refrigeration cycle wherein a compressor, an internal condenser, an external heat exchanger, an evaporator, and an accumulator are connected to each other by piping. The automotive air conditioner is configured as a heat pump type air conditioner that performs air conditioning inside a vehicle's passenger compartment using the heat of refrigerant in a process where the refrigerant, which is used as a working fluid, circulates within the refrigeration cycle while the refrigerant changes its state. The automotive air conditioner operates in such a manner as to switch a plurality of refrigerant circulation passages at the time of cooling and heating. The control valve according to the present embodiment is provided at a branch point of these refrigerant circulation passages and is configured as a three-way valve that switches the flows of refrigerant.

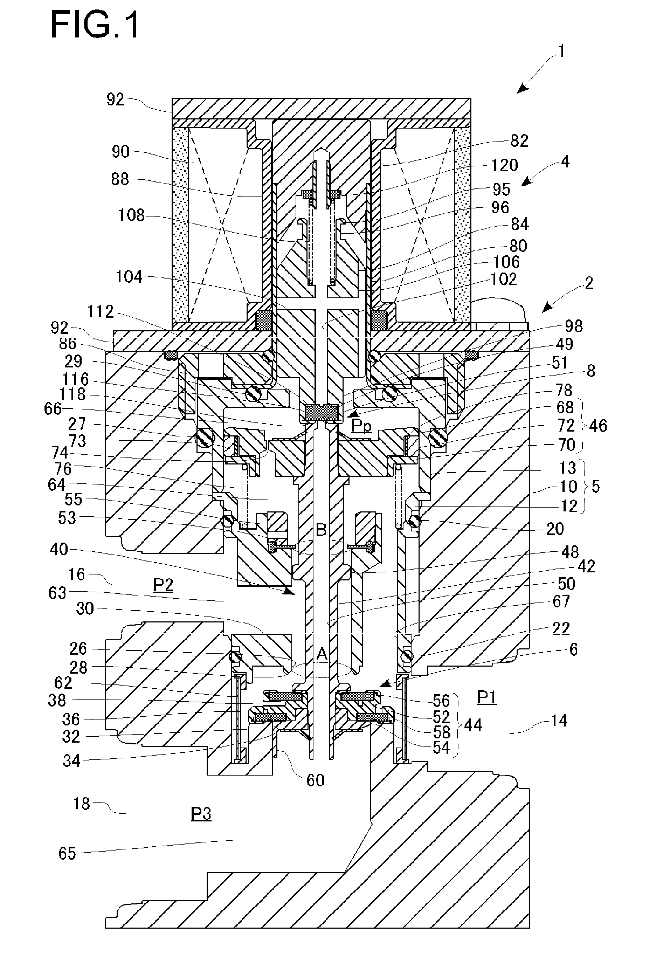

A description is now given of a concrete structure of the control valve according to the present embodiment. FIG. 1 is a cross-sectional view showing a concrete structure of an electromagnetic valve according to a first embodiment.

A control valve 1, which is a so-called pilot operated electromagnetic valve, is configured by assembling a valve unit 2 and a solenoid 4 in a direction of axis line. A main valve 6 and a pilot valve 8 are built into a body 5 of the valve unit 2. Here, the main valve 6 switches the flow of refrigerant from an upstream passage to either a first downstream passage or a second downstream passage, and the pilot valve 8 controls the opening and closing of the main valve 6.

The body 5 is configured such that a second body 12 of stepped cylindrical shape and a third body 13 of stepped cylindrical shape are assembled inside a first body 10, which is a prismatic column in shape. In the present embodiment, the first body 10 and the second body 12 are each made of an aluminum alloy, and the third body 13 is made of stainless steel (SUS). A lead-in port 14 leading to the upstream passage is provided on one of side surfaces of the first body 10. A lead-out port 16 (corresponding to "first lead-out port") leading to the first downstream passage is provided on an upper portion of a side opposite to said one of side surfaces of the first body 10, whereas a lead-out port 18 (corresponding to "second lead-out port") leading to the second downstream passage is provided on a lower portion thereof.

The second body 12 has a stepped cylindrical body with the diameter reduced toward the bottom, and the second body 12 is coaxially held by the first body 10. An O-ring 20 is fitted on the outer periphery of an upper end of the second body 12, and an O-ring 22 is fitted on the outer periphery of a lower end thereof. Provision of the O-ring 20 and the O-ring 22 prevents the refrigerant from being leaked through a gap in between the first body 10 and the second body 12. A valve hole 26 (corresponding to "first valve hole") is formed in the lower end of the second body 12, and a valve seat 28 (corresponding to "first valve seat") is formed in a lower end opening of the valve hole 26. A communication hole 30, which communicates to and from the second body 12, is formed in a surface facing the lead-out port 16 of the second body 12. A first passage (corresponding to "first main passage") joining the upstream passage to the first downstream passage is formed by an internal passage that connects the lead-in port 14, the valve hole 26 and the lead-out port 16.

The third body 13 of stepped cylindrical shape is held in an upper portion of the first body 10. An O-ring 27 is set between an upper end of the first body 10 and the third body 13. Provision of the O-ring 27 prevents the refrigerant from being leaked through a gap in between the first body 10 and the third body 13. An upper end of the third body 13 functions as a connection area where the solenoid 4 and the third body 13 are connected. An O-ring 29 is fitted on the upper end of the third body 13.

A valve seat forming section 32 having a circular boss shape is provided in a communicating area, where the lead-in port 14 and the lead-out port 18 meet and communicate with each other, in the first body 10. The valve seat forming section 32 protrudes on a second body 12 side, and a valve hole 34 (corresponding to "second valve hole") is formed in a space inward from the valve seat forming section 32. A valve seat 36 (corresponding to "second valve seat") is formed by an upper-end opening edge of the valve seat forming section 32. A second passage (corresponding to "second main passage") joining the upstream passage to the second downstream passage is formed by an internal passage that connects the lead-in port 14, the valve hole 34 and the lead-out port 18. The valve hole 26 and the valve hole 34 are provided in the coaxial direction, and a valve chamber 38 is formed between the valve hole 26 and the valve hole 34.

A driven member 40 is disposed inside the body 5. The driven member 40 is comprised of a cylindrical body 42, a valve element 44 integrally formed with the body 42 at a lower end of the body 42, a piston 46 formed integrally with body 42 at an upper portion thereof (the valve element 44 functioning as "main valve element"), and a partition member 48. Here, the cylindrical body 42 extends along a central portion of the body 5 in the direction of axis line, and the partition member 48 is provided in a middle part of the body 42 in the direction of axis line in such a manner as to protrude radially outward. In the present embodiment, the body 42 is made of an aluminum alloy. The body 42 is so provided as to penetrate the second body 12. A pilot passage 50 is so provided as to run through the body 42 in the direction of axis line. A pilot valve hole 49 is formed such that the inside diameter of an upper end of the body 42 is slightly reduced, and a pilot valve seat 51 is formed on an upper end opening of the pilot valve hole 49.

The valve element 44 includes a support member 52 and a guide member 54, which are inserted around and secured to the lower end of the body 42, a packing material 56 (which functions as "first sealing member") supported by a top face of the support member 52, and a packing material 58 (which functions as "second sealing member") supported by a bottom face of the support member 52. In the present embodiment, the support member 52 and the guide member 54 are each made of stainless steel (SUS). The packing materials 56 and 58 are each formed of a ring-shaped elastic body (e.g., rubber in the present embodiment). The valve element 44, which is displaceable within the valve chamber 38, closes and opens a first valve section when the packing material 56 touches and leaves the valve seat 28, respectively. Similarly, the valve element 44 closes and opens a second valve section when the packing material 58 touches and leaves the valve seat 36, respectively.

The guide member 54 has a disk-shaped body, which supports the support member 52 from below, and a plurality of legs 60 (only one of these legs shown in FIG. 1), which extend downward from a peripheral edge part of this disk-shaped body. And the guide member 54 is slidably supported by and along an inner circumferential surface of the valve hole 34. A cylindrical strainer 62 is provided in the valve chamber 38 in such a manner as to surround the valve element 44 from outside. The strainer 62 includes a filter that suppresses foreign materials from entering the valve chamber 38.

A piston 46 functions as a "partition member" by which a space surrounded by the second body 12 and the third body 13 is partitioned into a high-pressure chamber 64 and a back pressure chamber 66. The high-pressure chamber 64 communicates with the lead-in port 14 by way of a communicating path 67, provided in the second body 12, which functions as "refrigerant leading path". The back pressure chamber 66 communicates with the inside of the solenoid 4. A downstream side of the valve hole 26 forms a low-pressure chamber 63 and communicates with the lead-out port 16. A downstream side of the valve hole 34 forms a low-pressure chamber 65 and communicates with the lead-out port 18. A "sub-passage" is constituted by a passage that communicates the lead-in port 14 to the lead-out port 18 by way of the communicating path 67, the high-pressure chamber 64, the back pressure chamber 66 and the pilot passage 50. The piston 46 is slidably supported by and along a guiding passage 73, which is formed in an inner circumferential surface of the third body 13. The driven member 40 is configured such that a piston ring 72 and the legs 60 are slidably supported by and along an inner circumferential surface of the body 5. This configuration allows the driven member 40 to operate in a stabilized manner in the opening and closing directions of the valve section.

The piston 46 is configured such that the piston 46 is divided, along the direction of axis line, into a piston body 68 and a support 70 and such that the piston ring 72 is held between the piston body 68 and the support 70. In the present embodiment, the piston body 68 and the support 70 are each made of an aluminum alloy, and the piston ring 72 is formed of polytetrafluoroethylene (PTFE). The piston body 68 is of stepped disk shape such that the diameter thereof is reduced in stages toward the bottom. And the piston body 68 is secured such that the piston body 68 is coaxially press-fitted to an upper portion of the body 42. A communicating path 74, having a small diameter, through which the high-pressure chamber 64 and the back pressure chamber 66 communicate with each other, is formed in the piston body 68. A flange portion, which extends radially outward and abuts against a top face of the piston ring 72, is provided at an upper end of the piston body 68.

The support 70, which is of stepped annular shape, is fitted to a lower half of a smaller-diameter part of the piston body 68 in such a manner as to be inserted around the lower half thereof. A flange portion, which extends radially outward and abuts against a bottom face of the piston ring 72, is provided at an upper end of the support 70. A spring 76, which biases the piston 46 in an upward direction, is set between the support 70 and the second body 12. The spring 76 functions as a "biasing member" that biases the support 70 in a direction in which the support 70 is brought close to the piston body 68. The outside diameter of each of the flange portions of the piston body 68 and the support 70 is slightly smaller than the inside diameter of the guiding passage 73.

The piston ring 72 is assembled between the piston body 68 and the support 70 in a manner such that the piston ring 72 is fitted into a recess formed by the piston body 68 and the support 70. A tension ring 78 is set between an outer circumferential surface of the piston body 68 and an inner circumferential surface of the piston ring 72. The tension ring 78, which is formed of a spring steel, biases the piston ring 72 radially outward from the inside of the piston ring 72. Thereby, the piston ring 72 is pressed against the guiding passage 73 so as to obtain an appropriate sliding resistance. In other words, the piston 46 is slidably supported by and along the guiding passage 73 at the position of the piston ring 72. Though, in the present embodiment, the sealing property is improved using a specially assembled structure, its detailed description will be given later.

A pressure-receiving regulation member 53 is provided in an upper end opening of the second body 12. The pressure-receiving regulation member 53 regulates an effective pressure-receiving area of the partition member 48 such that when the first valve section is closed, the pressure-receiving regulation member 53 attaches firmly to the partition member 48. The pressure-receiving regulation member 53 is formed of a ring-shaped thin elastic body (e.g., rubber). A stopper ring 55 is press-fitted to an upper end of the second body 12. The pressure-receiving regulation member 53 is supported such that a thick-walled part in the outer periphery thereof is held between the second body 12 and the stopper ring 55.

The solenoid 4 has a stepped cylindrical sleeve 80, which is assembled to the third body 13 on an upper end thereof, and a bottomed cylindrical core 82 (fixed iron core), which is so assembled as to close an upper end opening of the sleeve 80. The sleeve 80, which is nonmagnetic, and the core 82 constitute a can for closing an internal pressure chamber. A cylindrical plunger 84 (movable iron core) is contained in the sleeve 80. The plunger 84 is disposed within the sleeve 80 in a position axially opposite to the core 82 in the direction of axis line.

A ring-shaped fixed member 86 is fastened in an upper end opening of the first body 10. Thereby, the sleeve 80 is secured relative to the third body 13. In other words, a flange portion, which protrudes radially outward, is provided at a lower end of the sleeve 80, and the fixed member 86 is assembled such that the fixed member 86 presses against the flange portion from above. Also, the fixed member 86 has an external thread on an outer periphery thereof, and an internal thread is formed in an upper end opening of the first body 10. Thus, the sleeve 80 can be stably secured when the fixed member 86 is screwed to the first body 10 while a lower end of the sleeve 80 is being assembled to the upper end of the third body 13. The O-ring 29 is set between the sleeve 80 and the third body 13, and provision of the O-ring 29 prevents the refrigerant from being leaked through a gap in therebetween.

A bobbin 88 is provided on an outer periphery of the sleeve 80, and an electromagnetic coil 90 is wound around the bobbin 88. A pair of end members 92 are so provided as to hold the electromagnetic coil 90 from top and bottom thereof. The end members 92 also function as a yoke that constitutes a magnetic circuit. A current carrying harness (not shown) is led out from the electromagnetic coil 90.

A tapered surface, where the inside diameter of the core 82 is larger downward, is formed at a lower end thereof. Also, a tapered surface where the outside diameter of the plunger 84 is smaller upward, is formed at an upper end of the plunger 84. A small-diameter part 95, which is inserted to and removed from the core 82, is provided in an upper-end center part of the plunger 84. In other words, the surface of the plunger 84 facing the core 82 and the surface of the core 82 facing the plunger 84 are the tapered surfaces each having a shape complementary to that of the other. Moreover, the arrangement is such that a part of the plunger 84 can be inserted to and removed from the core 82. Thus, a large stroke of the plunger 84 is secured and, at the same time, a sufficient magnetic attractive force is obtained. Also, a relatively large recessed groove 96 is formed on an outer circumferential surface of the small-diameter part 95, thereby in habiting the magnetic leakage of the plunger 84 and the core 82 in a radial direction. By employing such configuration and arrangement as described above, the suction force produced by the solenoid 4 is obtained efficiently and stably.

A pilot valve element 98 extends downward from a lower end center part of the plunger 84. Also formed are a communicating path 102, which runs through the plunger 84 in the direction of axis line, a communicating path 104, which runs through the plunger 84 in a radial direction, and a communicating groove 106 in parallel with the axis line along an outer circumferential surface of the plunger 84. The communicating paths 102 and 104, and the communicating groove 106 communicate with one another. By employing such structure and arrangement as described above, a state of communication between a space, between the core 82 and the plunger 84, and the back pressure chamber 66 is maintained. Set between the core 82 and the plunger 84 is a spring 108 (functioning as a "biasing member") that biases the plunger 84 in such a direction as to separate the core 82 away from the plunger 84.

The pilot valve element 98 and the plunger 84 are coaxially integrated with each other. A recessed fitting part 116 is formed at a lower end of the pilot valve element 98, and a disk-shaped sealing member 112 is fitted there. In the present embodiment, the sealing member 112 is made of rubber. The sealing member 112 is immovably supported such that the lower end of the fitting part 116 is swaged inward. The communicating path 102 communicates with the fitting part 116. The pilot valve 8 is closed and opened when the sealing member 112 of the pilot valve element 98 touches and leaves the pilot valve seat 51, respectively. A caulking part of the fitting part 116, where the lower end thereof is swaged inward, constitutes a stopper 118, which is stopped by an upper end of the driven member 40.

A ring-shaped stopper 120 is fitted in a lower center part of the core 82. The stopper 120 is formed of an elastic body (e.g., rubber in the present embodiment) functions as a "shock-absorbing member". That is, as the conduction state (on/off state) of the solenoid 4 is switched from the conducting state to the nonconducting state (from on to off), the plunger 84 is displaced toward the core 82 in the upward direction along the direction of axis line and thereby the stopper 120 absorbs the shock. As a result, the occurrence of hitting sound is suppressed as compared with the case when the plunger 84 is directly stopped by the core 82.

In the above-described structure and arrangement, a pressure P1 introduced from the lead-in port 14 (hereinafter referred to as "upstream-side pressure P1") becomes a pressure P2 (hereinafter referred to as "downstream-side pressure P2") by passing through the main valve 6 in the first passage. At the same time, the upstream-side pressure P1 becomes a pressure P3 (hereinafter referred to as "downstream-side pressure P3") by passing through the main valve 6 in the second passage. Also, the upstream-side pressure P1 is led into the high-pressure chamber 64 after passing through the communicating path 67, then becomes an intermediate pressure Pp at the back pressure chamber 66 by passing through the communicating path 74, and further becomes the downstream-side pressure P3 by passing through the pilot valve 8.

According to the present embodiment, an effective pressure-receiving diameter **A** (seal section diameter) of the valve hole 26 and an effective pressure-receiving diameter **B** (seal section diameter) of the partition member 48 are set equal to each other. Thus, the effect of the downstream-side pressure P2 acting on the driven member 40 is cancelled when the first valve section is closed. In particular, provision of the pressure-receiving regulation member 53 strictly achieves the cancellation of the effect of the downstream-side pressure P2 acting thereon. In other words, when the first valve section is closed, a bottom face of the pressure-receiving regulation member 53 and a top face of the partition member 48 attach firmly to each other. This achieves the accurate pressure cancellation.

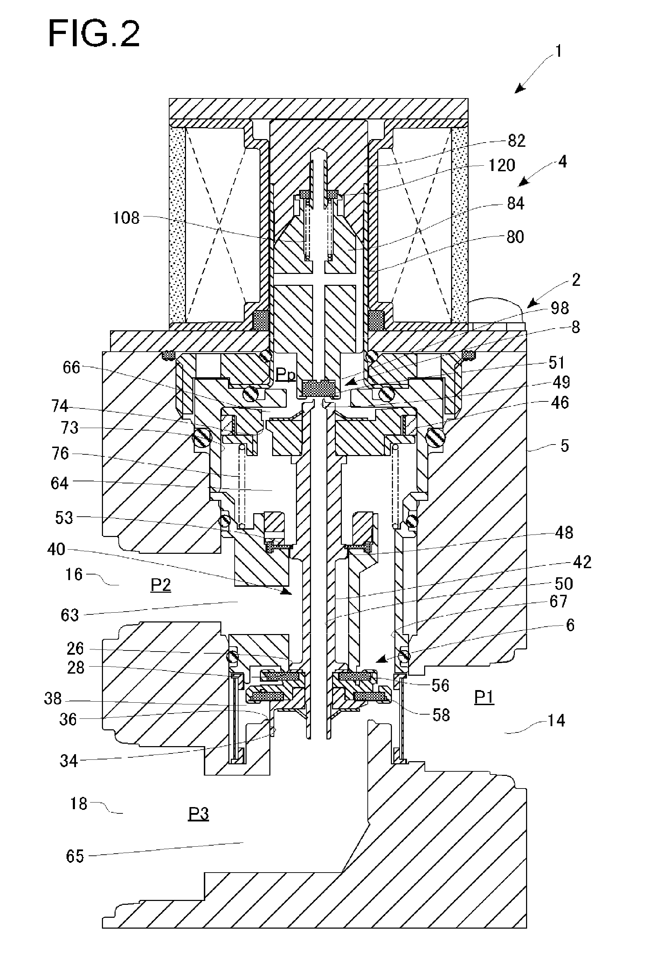

The control valve 1 configured as described above functions as a pilot operated control valve that switches the flow passages of refrigerant, depending on the conduction state of the solenoid 4. An operation of the control valve 1 is hereinbelow described in detail. FIG. 2 is a diagram for explaining an operating state of the control valve 1. FIG. 2 represents a conducting state where the solenoid 4 is turned on. Note that the already-explained FIG. 1 represents a nonconducting state where the solenoid 4 is turned off.

Since, as shown in FIG. 1, the solenoidal force does not work while the solenoid 4 is turned off, the pilot valve element 98 is biased, by the spring 108, in a valve closing direction and therefore the pilot valve 8 is closed. At this time, the refrigerant from the upstream side is led into the back pressure chamber 66 through the communicating path 74 and therefore the intermediate pressure Pp becomes the upstream-side pressure P1. As a result, the driven member 40 is biased, in a downward direction, by a pressure difference (Pp - P3) between the intermediate pressure Pp and the downstream-side pressure P3. Thereby, the first valve section of the main valve 6 is opened and the second valve thereof is closed. In other words, an opened state of the first passage and a closed state of the second passage are achieved as shown in FIG. 1, and the refrigerant introduced through the lead-in port 14 is led out from the lead-out port 16.

When, on the other hand, the solenoid 4 is turned on, the suction force is created by the solenoidal force in between the plunger 84 and the core 82, as shown in FIG. 2. Thus, the pilot valve element 98 is biased in a valve opening direction and then the pilot valve 8 is opened. At this time, the refrigerant at the back pressure chamber 66 is led out to the downstream side through the pilot passage 50, and the intermediate pressure Pp drops. As a result, the driven member 40 is biased, in an upward direction, by a pressure difference (P1 - Pp) between the upstream-side pressure P1 and the intermediate pressure Pp. Thereby, the first valve section of the main valve 6 is closed and the second valve thereof is opened. This achieves an opened state of the second passage and a closed state of the first passage, as shown in FIG. 2. In other words, the refrigerant introduced from the lead-in port 14 is led out from the lead-out port 18.

A detailed description is now given of characteristic and distinctive structure and operations of the control valve 1.

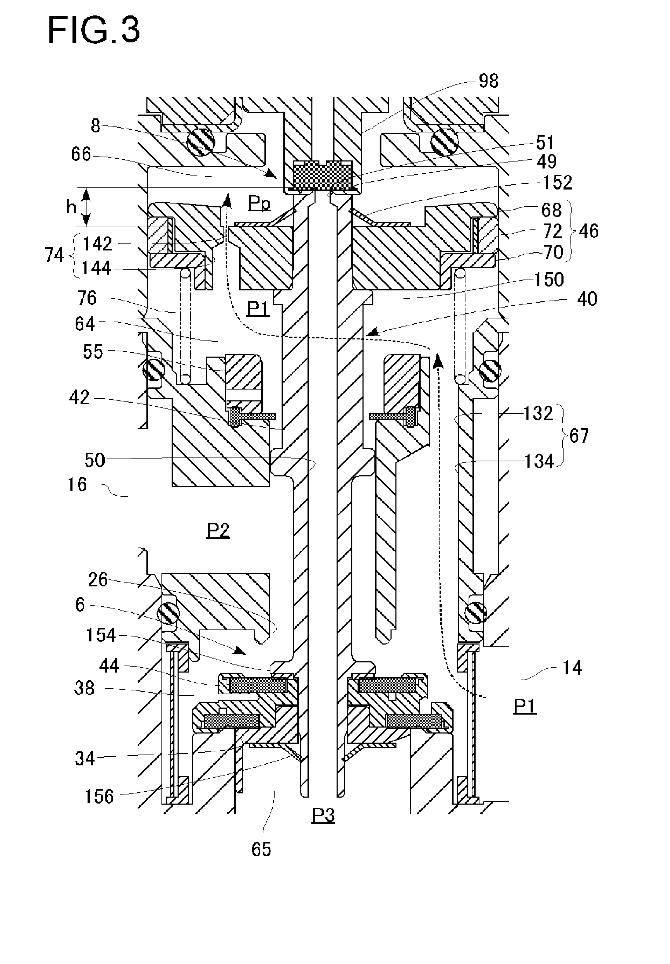

FIG. 3 is a partially enlarged view showing the driven member 40 and its peripheral components. In the present embodiment, the communicating path 74, which vertically runs through the piston body 68, has a special shape. That is, the communicating path 74 is formed such that an orifice 142 (leak passage), having a small diameter, which is open to the back pressure chamber 66 and a communication hole 144, having a large diameter, which is open to the high-pressure chamber 64 are vertically connected with each other. Here, the orifice 142 is located above the communication hole 144. The diameter of the orifice 142 is sufficiently smaller than that of the pilot valve hole 49. On the other hand, the diameter of the communication hole 144 is sufficiently larger than that of the pilot valve hole 49.

As described above, the cross section of the communication hole 144, which constitutes an upstream side portion of the communicating path 74, is large, and the cross section of the orifice 142, which constitutes a downstream side portion thereof, is small. This profile of the communicating path 74 allows the liquid refrigerant to be less likely to be led into the back pressure chamber 66. In other words, the communication hole 144 having a large diameter is provided upstream of the communicating path 74 and is open to the high-pressure chamber 64. Thus, the capillary action is less likely to occur in the communicating path 74, and a liquid-phase refrigerant (i.e., liquid refrigerant) of the refrigerant in the high-pressure chamber 64 is less likely to be drawn upward.

Suppose, unlike the present embodiment, that the communicating path 74 is formed by the orifice 142 only or that the orifice 142 is formed upstream of the communicating path 74. Then, a passage with a small diameter will be open to the high-pressure chamber 64. With this structure of the above comparative example different from that of the present embodiment, the liquid-phase refrigerant (i.e., liquid refrigerant) of the refrigerant in the high-pressure chamber 64 is more likely to be drawn upward by the capillary action. In this case, the flow of the liquid refrigerant into the back pressure chamber 66 is facilitated by the surface tension of the liquid refrigerant. This therefore causes the liquid refrigerant to stay on the piston 46, which possibly causes the conventional problem.

In contrast to the above comparative example, by employing the present embodiment, the action of the liquid refrigerant drawn by the surface tension is restricted by the communication hole 144 having a large diameter. In other words, the introduction of the liquid refrigerant can be restricted while the flow of gaseous refrigerant into the back pressure chamber 66 through the orifice 142 located above the communication hole 144 is accelerated. As a result, the operation of the valve element 44 can be kept smoothly, without the pressure of the back pressure chamber 66 being excessively high, while the diameter of the orifice of the communicating path 74 remains small. In other words, the pilot operated control valve 1 (electromagnetic valve) can be smoothly operated without increasing the size of the solenoid 4.

In the present embodiment, the similar structure is applied to the communicating path 67. That is, the communicating path 67 is formed such that a small-diameter passage portion 132 having a relatively small diameter (functioning as "first passage portion") and a large-diameter passage portion 134 having a relatively large diameter (functioning as "second passage portion") are vertically connected with each other. Here, the small-diameter passage portion 132 is located above the large-diameter passage portion 134. The small-diameter passage portion 132 is open to the high-pressure chamber 64 on an upper side of the small-diameter passage portion 132. The large-diameter passage portion 134 is open to the valve chamber 38 on a lower side of the large-diameter passage portion 134. Although, in the present invention, the diameter of the small-diameter passage portion 132 and the diameter of the communication hole 144 are set equal to each other, the diameter of the small-diameter passage portion 132 may be larger than that of the communication hole 144. The diameter of the large-diameter passage portion 134 is twice or more that of the small-diameter passage portion 132; that is, the diameter of the large-diameter passage portion 134 is sufficiently larger than that of the small-diameter passage portion 132. This profile of the communicating path 67 also allows the liquid refrigerant of the refrigerant flowing to the high-pressure chamber 64 to be less likely to be led thereinto. In other words, in the present embodiment, both the communicating path 67 and the communicating path 74 have the similar function where the flow of the liquid refrigerant into the back pressure chamber 66 is restricted by using a two-stage entry thereinto.

The piston 46 is supported such that the piston body 68 is held between a stopper portion 150, which projects in an upper portion of the body 42, and a stopper ring 152. The valve element 44 is supported such that the valve element 44 is held between a stopper portion 154, which projects in a lower portion of the body 42, and a stopper ring 156. An upper end of the body 42 protrudes into the back pressure chamber 66, whereas a lower end thereof protrudes into the low-pressure chamber 65. In the present embodiment, the height of the upper end of the body 42 relative to the piston 46 (the height of the pilot valve seat 51 relative to an upper opening end of the orifice 142) is set sufficiently low. That is, the height thereof is set sufficiently low so that, even if the liquid refrigerant is introduced into the back pressure chamber 66, the liquid refrigerant can be easily discharged through the pilot passage 50 when the pilot valve 8 is opened. As shown in FIG. 3, the upper end of the body 42 is protruded above the piston body 68, in the present embodiment. However, the pilot valve seat 51 may be provided in a position coplanar with or lower than the upper opening end of the orifice 142, by forming a recess in an upper-end central portion of the piston body 68, for instance. By employing such configuration and arrangement as described above, in the event that the liquid refrigerant is introduced into the back pressure chamber 66 and stays on the piston 46, the liquid refrigerant can be easily discharged through the pilot passage 50 when the pilot valve 8 is opened.

In the present embodiment, the position of the piston 46 relative to the lead-in port 14 is set sufficiently high. In other words, the position thereof is set so that, even though the piston 46 is positioned at a bottom dead point as shown in FIG. 3 (state where the second valve section is closed), the volume of the high-pressure chamber 64 can be kept higher than that of the back pressure chamber 66. This allows the liquid refrigerant, among the refrigerant introduced through the lead-in port 14, to be less likely to reach the back pressure chamber 66. As described above, the synergistic effect achieved by the shapes of the communicating path 74 and the communicating path 67 and the arrangement of the piston 46 makes the refrigerant to be less likely to be introduced into the back pressure chamber 66. At the same time, setting the pilot valve seat 51 in a lower position makes the liquid refrigerant to be easily discharged, should the liquid refrigerant have been introduced into the back pressure chamber 66. As a result, the operation of the valve element 44 can be kept smoothly, without the pressure of the back pressure chamber 66 being excessively high, while the diameter of the orifice of the communication path 74 remains small.

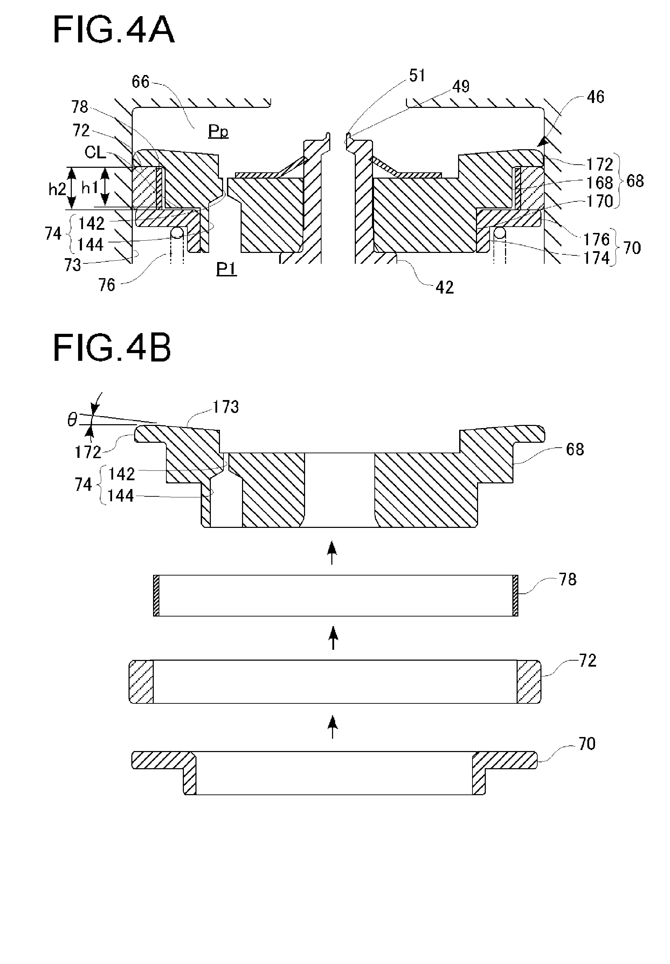

FIGS. 4A and 4B are each a partially enlarged view of a seal structure in a piston of a driven member. FIG. 4A shows a structure around the piston, and FIG. 4B shows a process of assembling the piston. As shown in FIG. 4A, the piston 46 is configured such that the piston ring 72 is held between the piston body 68 and the support 70. The piston body 68 has a larger-diameter part 168, around which the piston ring 72 is inserted, and a smaller-diameter part 170, around which the support 70 is inserted. A flange portion 172 is formed connectedly on an upper portion of the larger-diameter part 168. Also, the support 70 has a ring-shaped body 174, which is inserted around the smaller-diameter part 170, and a flange portion 176, which extends radially outward from an upper portion of the body 174. An upper end of the spring 76 is supported by the flange portion 176. When the piston 46 is to be assembled, the tension ring 78, the piston ring 72 and the support 70 are sequentially assembled relative to the piston body 68, as shown in FIG. 4B.

As shown in FIG. 4A, a height h1 of the larger-diameter part 168 is slightly smaller than a height h2 of the piston ring 72. The height of the tension ring 78 is slightly smaller than the height h2 of the piston ring 72. As a result, a predetermined clearance CL is formed between the piston body 68 and the support 70, in the direction of axis line. Provision of the clearance CL allows the piston ring 72 to reliably abut against the flange portion 172 on an upper end surface of the piston ring 72 and allows the piston ring 72 to reliably abut against the flange portion 176 on a lower end surface thereof. In other words, the piston ring 72 is reliably held by the piston body 68 and the support 70.

Though not shown in FIGS. 4A and 4B, the piston ring 72 is ring-shaped such that one spot thereof in a peripheral direction is open and such that one end thereof in the peripheral direction is engaged with the other end thereof in the peripheral direction. Thereby, the piston ring 72 is configured such that it is deformable in the radial direction by up to a predetermined amount. The tension ring 78 has a C-shape cross section and is constituted by a plate spring that generates a biasing force radially outward. When the piston 46 having been configured as described above is assembled as shown in FIG. 4A, the tension ring 78 presses the piston ring 72, from within, radially outward. This creates an appropriate sliding force in between the piston ring 72 and the guiding passage 73.

By employing the present embodiment, the piston 46 is configured as described above, so that the leakage amount of refrigerant can be significantly reduced in a domain where the pressure difference ΔP is small to a domain where the pressure difference ΔP is large. That is, as shown in FIG. 4A, the present embodiment is configured such that the piston 46 is divided into the piston body 68 and the support 70, such that the piston ring 72 is held between the piston body 68 and the support 70, and such that a clamping force by which to hold the piston ring 72 therebetween can be obtained by not only the pressure difference (P1 - Pp) but also the biasing force of the spring 76. Thus, even when, in particular, the pressure difference (P1 - Pp) is small, the top face and the bottom face of the piston ring 72 can be firmly attached to the piston body 68 and the support 70, respectively. This suppresses the leakage of refrigerant through a gap in the fitting part of the piston ring 72 in the piston 46.

As shown in FIG. 4B, a tapered surface 173 having a predetermined angle θ, formed relative to a top face of the flange portion 172, is formed on an upper end periphery of the piston body 68. The tapered surface 173 is provided in order that an upper pressure-receiving surface of the piston 46 can function adequately in the event that the piston 46 is located at a top dead point. In other words, the top dead point of the piston 46 is determined when the upper end of the piston body 68 is stopped by an upper base of the third body 13 (see FIG. 2). In this manner, the back pressure chamber 66 is assured even when the piston 46 is located at the top dead point, so that the difference pressure (P1 - Pp) can be accurately received.

### [Second Embodiment]

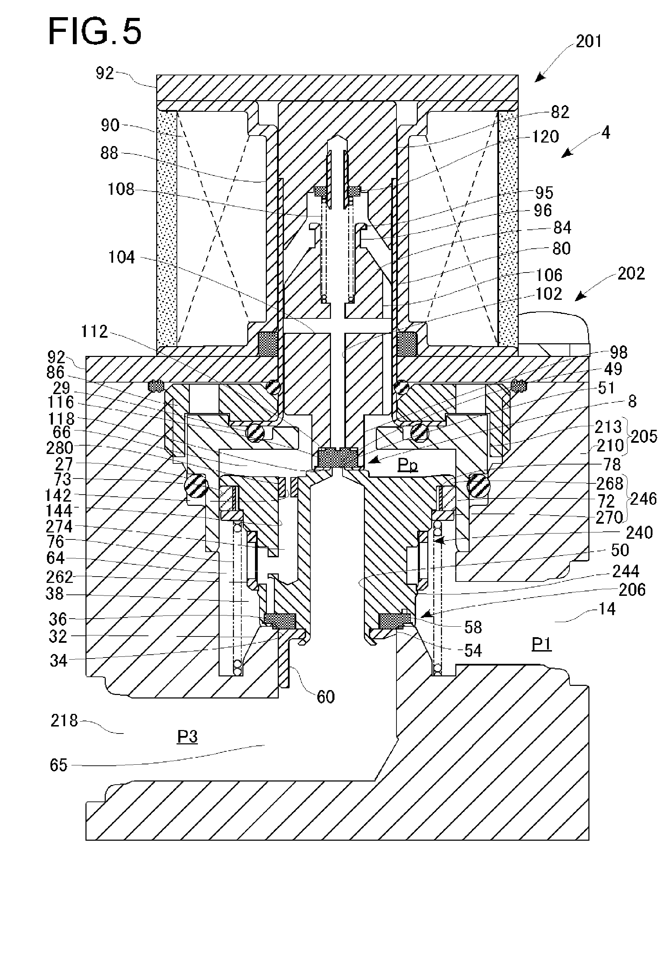

FIG. 5 is a cross-sectional view showing a concrete structure of an electromagnetic valve 201 according to a second embodiment. A description is hereinbelow given centering around different features from the first embodiment. Note that the structural components in FIG. 5 closely similar to those of the first embodiment are given the identical reference numerals.

The control valve 201 is a pilot generated electromagnetic valve similar to the first embodiment but differs from the first embodiment in that the control valve 201 is configured as a two-way valve. The control valve 201 permits or blocks the flow of refrigerant in one direction. The control valve 201 is configured by assembling a valve unit 202 and the solenoid 4 in the direction of axis line. A main valve 206, which communicates or blocks the flow of refrigerant between an upstream passage and a downstream passage, and the pilot valve 8, which controls the opening and closing of this main valve 206, are built into a body 205 of the valve unit 202.

The body 205 is configured such that a second body 213 is assembled on an upper portion of a first body 210. In the present embodiment, the first body 210 is made of an aluminum alloy, and the second body 213 is made of stainless steel (SUS). The second body 213 has a configuration similar to that of the third body 13 of the first embodiment. A lead-in port 14 leading to the upstream passage is provided on one of side surfaces of the first body 210. A lead-out port 218 leading to the downstream passage is provided on a lower portion of a side opposite to said one of side surfaces of the first body 210. The passage joining the upstream passage to the downstream passage constitutes a "main passage". The valve chamber 38 located upstream of the valve hole 34 functions as the high-pressure chamber 64 as well.

A driven member 240 is disposed inside the body 205. The driven member 240 has a stepped cylindrical body whose diameter is reduced downward in stages. An upper portion of the body constitutes a piston 246, whereas a lower portion thereof constitutes a valve element 244, which functions as "main valve element". The pilot passage 50 is so formed as to run through the driven member 240 in the direction of axis line. The pilot valve hole 49 is formed such that the inside diameter of an upper portion of the pilot passage 50 is slightly reduced, and the pilot valve seat 51 is formed on an upper end opening of the pilot valve hole 49. The valve element 244, which has the packing material 58 and the guide member 54, closes and opens the main valve 206 when the packing material 58 touches and leaves the valve seat 36, respectively.

The piston 246 functions as a "partition member" by which a space surrounded by the first body 210 and the second body 213 is partitioned into a high-pressure chamber 64 and the back pressure chamber 66. The high-pressure chamber 64 communicates with the lead-in port 14. The driven member 240 is configured such that the piston ring 72 and the legs 60 are slidably supported by and along the inner circumferential surface of the body 205. This configuration allows the driven member 240 to operate in a stabilized manner in the opening and closing directions of the main valve 206.

The piston 246 is configured such that the piston 246 is divided, along the direction of axis line, into a piston body 268 and a support 270 and such that the piston ring 72 is held between the piston body 268 and the support 270. The support 270, which is of annular shape, is fitted to a lower half of a smaller-diameter part of the piston body 268 in such a manner as to be inserted around the lower half thereof. A communicating path 274, which communicates between the high-pressure chamber 64 and the back pressure chamber 66, is formed in the piston body 268. A path formation member 280, which is formed of a small cylinder, is press-fitted to an upper end of the communicating path 274, and an orifice 142 is formed there by an internal path of the path formation member 280.

In other words, the communicating path 274 is so formed as to vertically run through the piston body 268. The communicating path 274 is formed such that the orifice 142 (leak passage), having a small diameter, which is open to the back pressure chamber 66 and a communication hole 144, having a large diameter, which is open to the high-pressure chamber 64 are vertically connected with each other. Here, the orifice 142 is located above the communication hole 144. The diameter of the orifice 142 is sufficiently smaller than that of the pilot valve hole 49. A lower end of the communication hole 144 is open on a lateral side of the driven member 240 and communicates with the high-pressure chamber 64. A cylindrical strainer 262 is provided in the driven member 240 in such a manner as to surround a lower end opening of the communication hole 144 from outside. The strainer 262 includes a filter that suppresses foreign materials from entering the back pressure chamber 66.

As described above, in the present embodiment, too, the cross section of the communication hole 144, which constitutes an upstream side portion of the communicating path 274, is large, and the cross section of the orifice 142, which constitutes a downstream side portion thereof, is small. This profile of the communicating path 274 allows the liquid refrigerant to be less likely to be led into the back pressure chamber 66. As a result, the operation of the valve element 244 can be kept smoothly, without the pressure of the back pressure chamber 66 being excessively high, while the diameter of the orifice of the communicating path 274 remains small. In other words, the pilot operated control valve 201 (electromagnetic valve) can be smoothly operated without increasing the size of the solenoid 4.

Also, as shown in FIG. 5, the height of the pilot valve seat 51 relative to an upper opening end of the orifice 142 is set sufficiently low. Thus, in the event that the liquid refrigerant is introduced into the back pressure chamber 66 and stays on the piston 246, the liquid refrigerant can be easily discharged through the pilot passage 50 when the pilot valve 8 is opened.

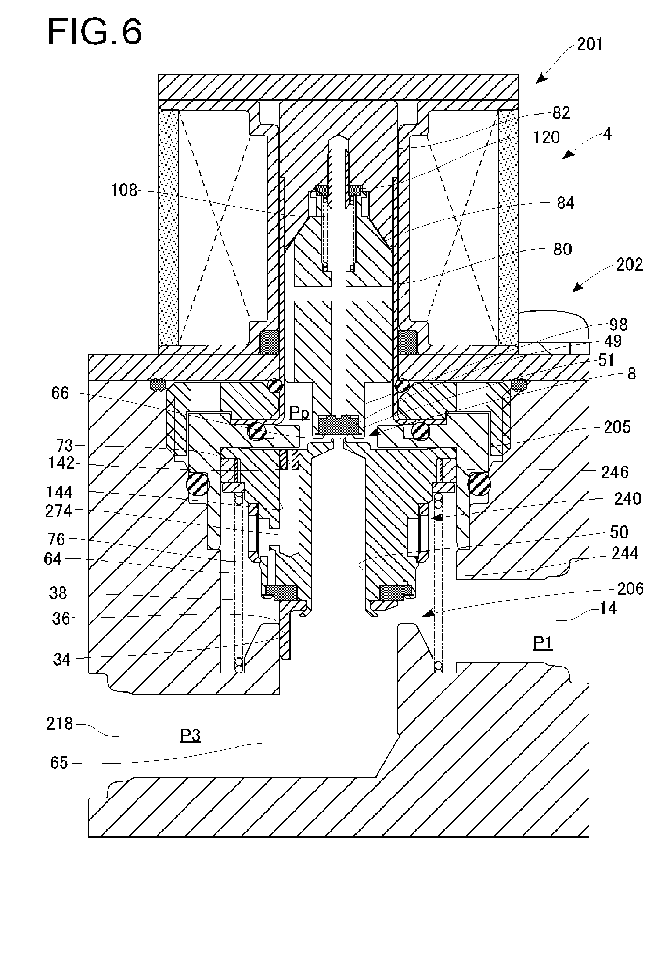

The control valve 201 configured as described above functions as a pilot operated control valve that switches the flow passages of refrigerant, depending on the conduction state of the solenoid 4. An operation of the control valve 201 is described below. FIG. 6 is a diagram for explaining an operating state of a control valve. FIG. 6 represents a conducting state where the solenoid 4 is turned on. Note that the already-explained FIG. 5 represents a nonconducting state where the solenoid 4 is turned off.

Since, as shown in FIG. 5, the solenoidal force does not work while the solenoid 4 is turned off, the pilot valve 8 is closed. At this time, the refrigerant from the upstream side is led into the back pressure chamber 66 through the communicating path 274 and therefore the intermediate pressure Pp becomes the upstream-side pressure P1. As a result, the driven member 240 is biased, in a downward direction, by a pressure difference (Pp - P3) between the intermediate pressure Pp and the downstream-side pressure P3. Thereby, the main valve 206 is closed.

When, on the other hand, the solenoid 4 is turned on, the suction force is created by the solenoidal force in between the plunger 84 and the core 82, as shown in FIG. 6. Thus, the pilot valve 8 is opened. At this time, the refrigerant at the back pressure chamber 66 is led out to the downstream side through the pilot passage 50, and the intermediate pressure Pp drops. As a result, the driven member 240 is biased, in an upward direction, by a pressure difference (P1 - Pp) between the upstream-side pressure P1 and the intermediate pressure Pp. Thereby, the main valve 206 is opened, and the refrigerant introduced from the lead-in port 14 is led out from the lead-out port 218.

The description of the present invention given above is based upon illustrative embodiments. These embodiments are intended to be illustrative only and it will be obvious to those skilled in the art that various modifications could be further developed within the technical idea underlying the present invention.

In the above-described embodiments, the description has been given of an example where the control valve is configured as a normally-closed valve that closes the pilot valve when the solenoid is turned off. In a modification, the control valve may be configured as a normally-open valve that opens the pilot valve when the solenoid is turned off. For example, in the configuration as shown in FIG. 1, FIG. 5 and so forth, this can be achieved by switching the position of the plunger and that of the core and by setting the pilot valve element such that it penetrate the core.

In the above-described embodiments, the description has been given of an example where the control valve is configured as a three-way valve having two lead-out ports for a single lead-in port or as a two-way valve having one lead-out port for a single lead-in port. In a modification, the control valve may be configured as a four-way valve having two lead-out ports for two lead-in ports.

In the above-described embodiments, a description has been given of an example where the control valve is applied to an air conditioner of an electric-powered vehicle. However, it goes without saying that the control valve according to the preferred embodiments is applicable to not only an air conditioner of a vehicle provided with an internal-combustion engine but also an air conditioner of a hybrid vehicle equipped with both an internal-combustion engine and an electric motor drive. Further, the control valve according to the preferred embodiments is applicable to not only the vehicles but also any apparatuses and devices equipped with the electrically driven valve. Also, the control valve according to the preferred embodiments is applicable to an apparatus or system where a fluid, such as water or oil, other than the refrigerant flows is applicable.

The present invention is not limited to the above-described embodiments and modifications only, and those components may be further modified to arrive at various other embodiments without departing from the scope of the invention. Also, various other embodiments may be further formed by combining, as appropriate, a plurality of structural components disclosed in the above-described embodiments and modification. Also, one or some of all of the components exemplified in the above-described embodiments and modifications may be left unused or removed.

## Claims

1. A pilot operated electromagnetic valve (1) comprising:
a body (5) having a lead-in port (14) through which a refrigerant is led in, a lead-out port (18) through which the refrigerant is led out, and a main valve hole (34) provided in a main passage joining the lead-in port (14) to the lead-out port (18);
a solenoid (4) mounted such that an upper end opening of the body (5) is closed;
a driven member (40) configured such that a piston (46) and a main valve element (44) are vertically coupled with each other and configured such that a pilot passage (50) runs through the driven member (40),
wherein the piston (46) separates a high-pressure chamber (64), which communicates with the lead-in port (14), from a back pressure chamber (66),
wherein the main valve element (44) opens and closes a main valve (6) by moving toward and away from the main valve hole (34), and
wherein the pilot passage (50) communicates between a low-pressure chamber (65), which communicates with the lead-out port (18), and the back pressure chamber (66); and
a pilot valve element (98) that opens and closes a pilot valve (8) by moving toward and away from a pilot valve hole (49) from above,
wherein the pilot valve element (98) is integrally formed with a plunger (84) of the solenoid (4) and wherein the pilot valve hole (49) is provided on an upper end of the pilot passage (50),
wherein a refrigerant introducing path (67), through which the lead-in port (14) and the high-pressure chamber (64) communicate with each other, is provided in the body (5), and
wherein the refrigerant introducing path (67) is formed such that a first passage portion (132), which is open to the high-pressure chamber (64),
and a second passage portion (134), having a larger cross section than that of the first passage portion (132), are vertically connected with each other, and wherein the first passage portion (132) is located above the second passage portion (134).

2. An electromagnetic valve (1) according to claim 1, wherein a communicating path (74), through which the high-pressure chamber (64) and the back pressure chamber (66) communicate with each other, is formed in the piston (46), and
wherein the communicating path (74) is formed such that an orifice (142), which is open to the back pressure chamber (66), and a communication hole (144), having a larger cross section than that of the orifice (142), are vertically connected with each other, and wherein the orifice (142) is located above the communication hole (144).
